# EUROPEAN PATENT SPECIFICATION

(11) **EP 4 450 829 B1**
(45) Date of publication and mention of the grant of the patent: **02.12.2026**
(21) Application number: 22906982.8
(22) Date of filing: 11.10.2022
(51) Int. Cl.: F15B 15/10, B25J 9/14

(54) **HYDRAULIC ACTUATOR**
HYDRAULISCHER AKTUATOR
ACTIONNEUR HYDRAULIQUE

(30) Priority: 17.12.2021 JP 2021205532
(43) Date of publication of application: 23.10.2024
(73) Proprietor: BRIDGESTONE CORPORATION, Chuo-ku Tokyo 104-8340 (JP)
(72) Inventor: OONO, Shingo, Chuo-ku, Tokyo (JP)
(74) Representative: Marks & Clerk LLP
(86) International application number: PCT/JP2022/037853
(87) International publication number: WO 2023/112447

(56) References cited:
- JP-A- 2007 068 794
- JP-A- 2015 180 829
- JP-A- 2017 046 754
- JP-A- 2018 189 169
- JP-A- 2019 090 531
- JP-A- 2019 120 373
- JP-A- 2021 088 999
- JP-A- 2021 088 999
- JP-A- H03 113 104
- JP-A- H06 147 202
- US-A- 5 083 498
- US-A1- 2005 081 711
- US-A1- 2019 143 539
- US-B1- 10 363 670

## Description

### [Technical Field]

The present invention relates to a hydraulic actuator, especially to a so-called McKibben-type hydraulic actuator.

### [Background Art]

Conventionally, as a hydraulic actuator that expands and contracts a tube using gas or liquid, widely used is a (so-called McKibben-type) structure with a rubber tube that expands and contracts by air pressure and a sleeve that covers the outer surface of the tube.

Also known is a McKibben-type hydraulic actuator in which its tube and its sleeve are not simply shortened in its axial direction but curled when an internal pressure of the tube increases (see Patent Literature 1 and 2). Specifically, known is a hydraulic actuator that has a restraint member embedded in the sleeve of the actuator, and the actuator is curled due to the restraint of the restraint member, which resists axial compression of the tube.

### [Citation List]

### [Patent Literature]

**[Patent Literature 1]**
   Japanese Patent Laid-Open Publication No. 2021-88999
[Patent Literature 2]
US 5 083 498 A

### [Summary of invention]

However, in conventional hydraulic actuators to be curled, a member with rigidity that enables the tube to resist its axial compression is used as the restraint member. Therefore, it is not easy to further increase flexibility of the hydraulic actuator in order to use the hydraulic actuator to be curled for a robot hand (gripper) or the like. In other words, it is not easy to make a hydraulic actuator that is flexible enough in its curled state to gently grip a soft or light and easily-deformable manipulation target without breaking or deforming it.

An object of the present invention is to provide a hydraulic actuator to be curled with a configuration that can ensure flexibility in its curled state enough to gently grip a soft or light and easily-deformable manipulation object when used in a robot hand (gripper) or the like.

An actuator with the features of claim 1 is provided according to the invention.

According to the invention, it is possible to provide a hydraulic actuator capable of being curled with a structure that can ensure flexibility in its curled state enough to gently grip a soft or light and easily-deformable manipulation object when used in a robot hand (gripper) or the like.

### [Brief Description of Drawings]

[Fig. 1] Fig. 1(a) is an exploded perspective view of a hydraulic actuator according to an embodiment, and Fig. 1(b) is an enlarged perspective view magnifying a portion of a sleeve into which a restraint member is woven in the sleeve to be integrated therewith.
[Fig. 2] Fig. 2 is a developed view of the tube used in the hydraulic actuator: Fig. 2(a) shows a state before extending the hydraulic actuator, and Fig. 2(b) shows a state after extending the hydraulic actuator.
[Fig. 3] Fig. 3 is a cross-sectional view of the hydraulic actuator along its axial direction: Fig. 3(a) shows a state before curling the hydraulic actuator by the hydraulic pressure, and Fig. 3(b) shows a state after curling the hydraulic actuator by applying the hydraulic pressure thereto.
[Fig. 4] Fig. 4 is a cross-sectional exploded view magnifying a state before crimping a vicinity of a sealing member of a hydraulic actuator according to a modified example.
[Fig. 5] Fig. 5 is an exploded perspective view of the hydraulic actuator according to the modified example.

### [Description of Embodiments]

Hereinafter, an embodiment will be described based on the drawings. Note that the same functions and structures are denoted by the same or similar reference signs, and their description will be omitted accordingly.

### (1) Overall Schematic Configuration of Hydraulic Actuator

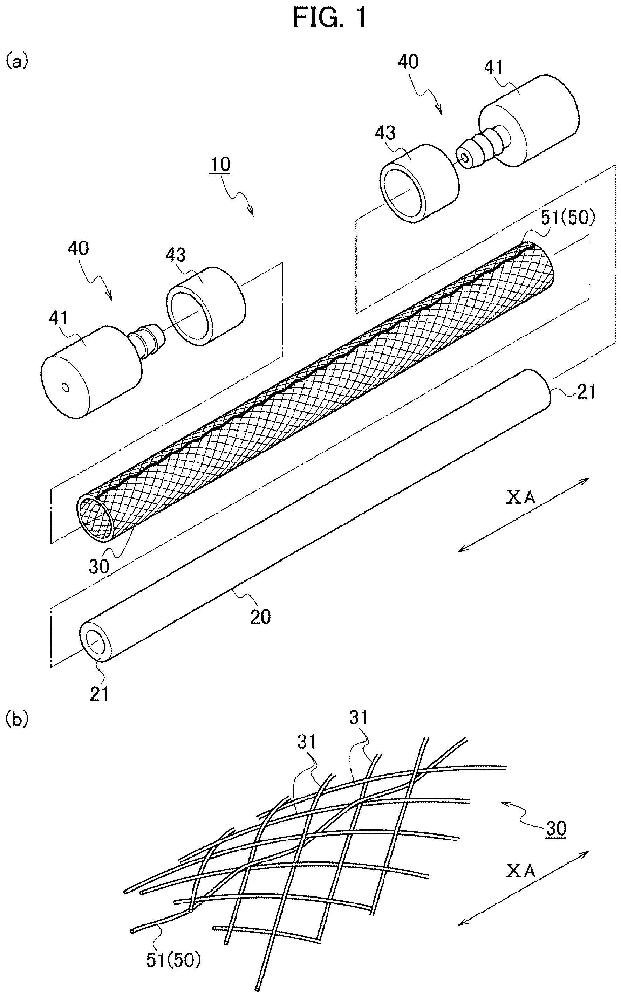

Fig. 1(a) is an exploded perspective view of a hydraulic actuator according to the embodiment. Fig. 1(b) is an enlarged perspective view magnifying a portion of a sleeve into which a restraint member is woven to be integrated with the sleeve.

As shown in Fig. 1(a), the hydraulic actuator 10 includes a tube 20 capable of being expanded and contracted by fluid pressure, a sleeve 30 that is a structural member made of woven fiber cords 31 directed in predetermined directions (predetermined weave angle) θ1 to exert stretchability and covers an outer circumferential surface of the tube 20, and a pair of sealing members 40 that seal both ends 21 of the tube 20 in an axial direction XA thereof, respectively.

As a basic characteristic, when the fluid pressure in the tube 20 is increased, the hydraulic actuator 10 of the embodiment elongates in the axial direction XA of the hydraulic actuator 10 while its expansion in a radial direction is restricted by the tension of the fiber cords 31 forming the sleeve 30. When the fluid pressure in the tube 20 is decreased, its length in the axial direction XA is restored. This shape change allows the hydraulic actuator 10 to function as an actuator.

The hydraulic actuator 10 like this is a so-called McKibben-type hydraulic actuator, and can be suitably used for artificial muscles and the like. The pair of the sealing members 40 may be provided with a joint portion (not shown in the drawings) or the like to be connected with a member or the like to be jointed.

In the present embodiment, as shown in Figs. 1(a) and 1(b), while using a McKibben-type hydraulic actuator having such basic characteristics, a restraint member 50 that restrains (may be also expressed as "regulates" or "limits", hereinafter the same) the elongation in the axial direction XA is provided at a part of a circumference of the hydraulic actuator 10. This configuration allows the hydraulic actuator 10 to curl so as to get convex in a perpendicular direction to the axial direction XA, i.e., curled so as to deviate from the axial direction XA.

Fluid used to actuate the hydraulic actuator 10 may be either a gas, such as air, or a liquid, such as water or mineral oil. The hydraulic actuator 10 can have high durability to withstand hydraulic actuation with high pressure on the tube 20 and sleeve 30. When a tube with a wall thickness or material that can be brought into action by low pressure generated by gases such as air is used as the tube 20 of the hydraulic actuator 10, the flexibility of the hydraulic actuator 10 is ensured. The hydraulic actuator 10 including the tube 20 as described above can be suitably used for gently gripping a soft or light and easily-deformable manipulation target.

The pair of sealing members 40 seals the both ends 21 of the tube 20 in the axial direction XA. Specifically, each of the sealing members 40 includes a sealing member main body 41 and a crimp member 43. The sealing member main body 41 seals the end 21 of the tube 20 in the axial direction XA. The crimp member 43 crimps the tube 20 and the sleeve 30 together with the sealing member main body 41. It is acceptable that press marks, which are marks made when the crimp member 43 is crimped by a jig, are formed on the outer circumferential surface of the crimp member 43.

The sealing member main body 41 of at least one sealing member 40 of the pair of the sealing members 40 is provided with a connection port to which a hose (conduit) connected to an actuation pressure source of the hydraulic actuator 10 is attached. The fluid pressure inside the tube 20 is controlled by the fluid that flows into and out of the hydraulic actuator 10 via a fluid passage 45 that is connected to this connection port, and the tube 20 of the hydraulic actuator 10 expands and contracts. Not that the driving pressure source of the hydraulic actuator 10 is, for example, a gas or liquid compressor.

### (2) Configuration of Hydraulic Actuator 10

As shown in Fig. 1(a), the hydraulic actuator 10 is configured of the tube 20, the sleeve 30, the pair of the sealing members 40, and the restraint member 50, as described above.

The tube 20 is a hollow cylindrical tube that is expanded or contracted by the fluid pressure. The tube 20 is made from an elastic material such as butyl rubber because of repeated expansion and contraction by the fluid. When the hydraulic actuator 10 is actuated hydraulically, it is preferable that the elastic material is NBR (nitrile rubber) with high oil resistance, or is at least one material selected from a group consisting of hydrogenated NBR, chloroprene rubber, and epichlorohydrin rubber.

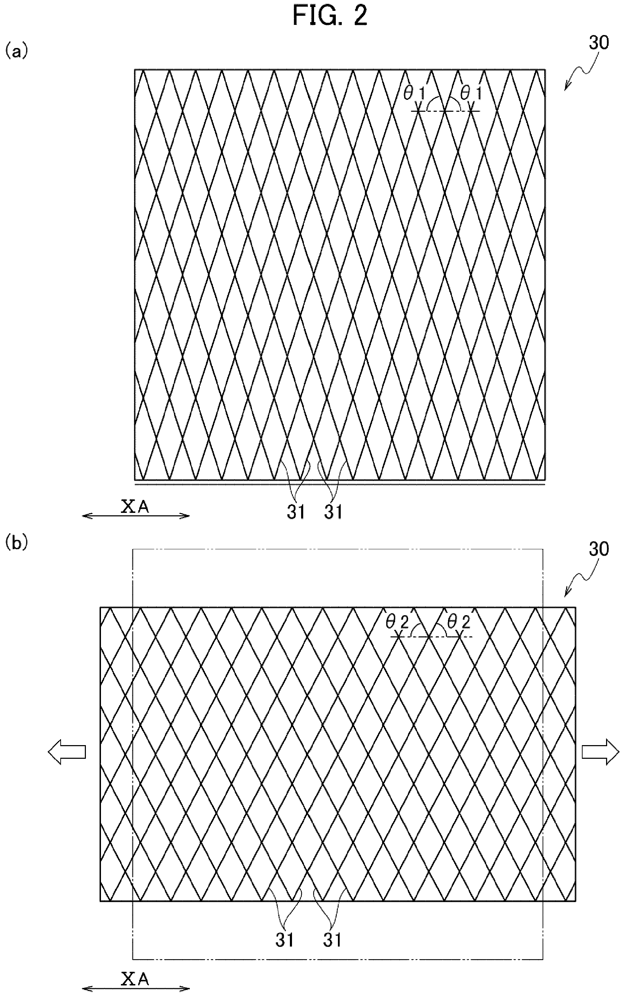

Fig. 2 is a developed view of the sleeve 30 used in the hydraulic actuator 10. Fig. 2(a) is a developed view showing a state before elongating the hydraulic actuator 10. Fig. 2(b) is a developed view showing a state after elongating the hydraulic actuator 10.

As shown in Figure 1(a), the sleeve 30 has a hollow cylindrical shape and covers the outer circumferential surface of the tube 20 in the hydraulic actuator 10. As shown in Fig. 2(a), the sleeve 30 is a structural member made of woven fiber cords 31 directed in predetermined directions (predetermined weave angle) θ1 relative to the axial direction XA of the tube 20 (axial direction of the hydraulic actuator 10) whose inside pressure is not yet increased to exert stretchability. The fiber cords 31 are woven to have a structure in which the directed fiber cords 31 form a repetitive-rhombic pattern by being crossed each other. By having such a pattern, the sleeve 30 deforms in a pantograph manner as shown in Figs. 2(a) and 2(b) and follows the expansion and contraction of the tube 20 while regulating the expansion and contraction.

Note that, in the McKibben-type hydraulic actuator 10, the sleeve 30, which is crimped onto the sealing members 40 together with the tube 20, is actuated so that the weave angle of the woven fiber cords 31 converges to 54.7 degrees when the hydraulic actuator 10 is actuated. Therefore, in a case where the weave angle before the hydraulic actuator 10 is actuated is smaller than 54.7 degrees, the hydraulic actuator 10 gets shrunk in the axial direction. And, in a case where the weave angle is greater than 54.7 degrees, the hydraulic actuator 10 gets elongated in the axial direction.

As shown in Fig. 2(a), the sleeve 30 used in the present embodiment is woven so that the directions of the fiber cords 31 of the sleeve 30 before the expansion and contraction form the predetermined weave angle θ1 greater than 54.7 degrees relative to the axial direction XA of the hydraulic actuator 10 before pressure is applied thereto. In other words, the directions of the fiber cords 31, which regulate the deformation of the tube 20 due to changes of its the internal fluid pressure, are oriented so as to be the predetermined directions (predetermined weave angle) θ1 by which the hydraulic actuator 10 elongates when the tube 20 is expanded. Specifically, the fiber cords 31 are woven into the sleeve 30 so that the weave angle θ1 becomes 60 degrees to 80 degrees.

As shown in Fig. 2(b), the hydraulic actuator 10 using this sleeve 30 is actuated so as to elongate, because the weave angle θ2 of the sleeve 30 becomes smaller than the pre-elongation weave angle θ1 (gets closer to 54.7 degrees) at the increase of the fluid pressure in the tube 20.

Aromatic polyamide (aramid fiber) or polyethylene terephthalate (PET) fiber cords are preferred as the fiber cords 31 that configures the sleeve 30. However, they are not limited to these types of fiber cords, but may also be made of high-strength fiber cords such as PBO fiber (poly-paraphenylene benzobisoxazole), for example.

In the present embodiment, as shown in Fig. 1(a), the restraint member 50 is provided at a part of a circumference of the tube 20 to extend from one end to another end of the tube 20 in the axial direction XA. Both ends of the restraint member 50 are crimped with the sealing members 40, respectively, together with the tube 20 and the sleeve 30.

The restraint member 50 is a member with tensile strength that can resist the elongating actuation of the hydraulic actuator 10.

When the hydraulic actuator 10 is actuated so as to be elongated by the increase of the fluid pressure in the tube 20, the restraint member 50 resists the force generated by the tube 20 in the direction for increasing the distance between the pair of the sealing members 40, because both ends of the restraint member 50 are crimped with the sealing members 40. At the part of the circumference of the tube 20 where the restraint member 50 is located, the tube 20 is prevented from expanding due to the above resist action, and thereby the elongation of the hydraulic actuator 10 is restricted. As a result, the hydraulic actuator 10 doesn't elongates along the axial direction XA but curls as the fluid pressure increases.

In the present embodiment, as shown in Fig. 1(b), the restraint member 50 is configured of a restraint fiber cord 51 that is woven into the sleeve 30 to be integrated therewith. The restraint fiber cord 51 included in the restraint member 50 is crimped by the sealing members 40 in a state of being integrated with the sleeve 30. In its integrated state with the sleeve 30, the restraint fiber cord 51 is woven into the sleeve 30 so as to cross the fiber cords 31 at positions where the fiber cords 31 of the sleeve 30 cross each other.

The restraint fiber cord 51 is selected according to the size of the hydraulic actuator 10 and the required generating force, and is not particularly limited. In other words, it is sufficient that the restraint fiber cord 51 has a tensile strength that can resist the elongating actuation of the hydraulic actuator 10. The material of the restraint fiber cord 51 is also not particularly limited. Typically, the material of the restraint fiber cord 51 can be selected from among fiber cords that can be used for the fiber cords 31 forming the sleeve 30, taking into consideration the desired tensile strength or the like. In other words, the restraint fiber cord 51 may be a fiber cord of the same material as the fiber cords 31, or a fiber cord different from the fiber cords 31 may be selected therefor.

The sealing member(s) 40 seals the end 21 of the tube 20 in the axial direction XA of the hydraulic actuator 10. The sealing member 40 is configured of the sealing member main body 41 and the crimp member 43.

The sealing member main body 41 is inserted into the tubular tube 20. Specifically, the sealing member main body 41 has a head whose diameter are larger than the inner diameter of the tube 20 and a stem having an outer diameter that can be inserted into the inner diameter of the tube 20. The stem is inserted into the tube 20.

A metal such as stainless steel may be suitably used as the sealing member main body 41, but it is not limited to such a metal. For example, a hard plastic material may be used as the sealing member main body 41.

The crimp member(s) 43 crimps the tube 20 into which the sealing member main body 41 is inserted, the sleeve 30 covering the outer circumferential surface of the tube 20, and the restraint member 50 woven into the sleeve to be integrated therewith together with the sealing member main body 41. Specifically, the crimp member 43 is provided around the circumference of the portion where the sealing member main body 41 is inserted into the tube 20, the sleeve 30 and the restraint member 50, and crimps these members 20, 30, 50 onto the sealing member main body 41.

Metals such as aluminum alloys, brass, and iron can be used for the crimp member 43. When the crimp member 43 is crimped by a crimping jig, the press marks may be formed on the crimp member 43.

Note that the sealing member(s) 40 may be provided with an engagement ring (not shown) for engaging the sleeve 30 and the restraint member 50 with the sealing member main body 41. Specifically, the sleeve 30 and the restraint member 50 may be folded radially outwardly via the engagement ring.

A shape of the engagement ring may be a shape that can be engaged with the sealing member main body 41. In addition, a material such as metal or hard plastic similar to that of the sealing member main body 41, or a material such as natural fibers (natural fiber threads) or rubber (e.g., O-ring) can be used for a material of the engagement ring.

### (3) Configuration of Sealing Mechanism

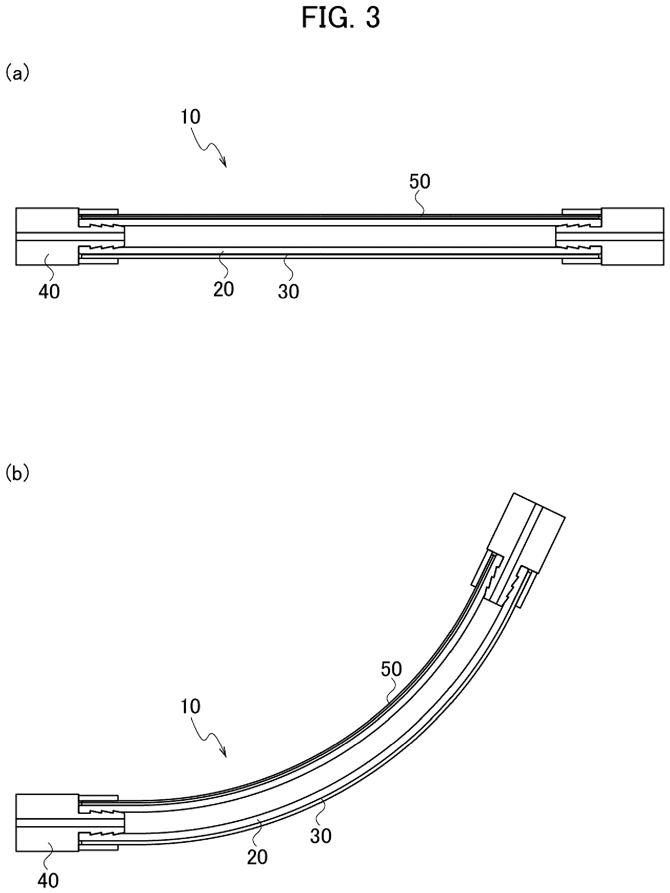

Fig. 3 is a cross-sectional view of the hydraulic actuator along its axial direction XA. Specifically, Fig. 3(a) is a cross-sectional view showing a state before curling the hydraulic actuator by the hydraulic pressure. Fig. 3(b) is a cross-sectional view showing a state after curling the hydraulic actuator by applying the hydraulic pressure thereto.

As shown in Fig. 3(a), the stem of the sealing member main body 41 is inserted into the tube 20. The tube 20, the sleeve 30 covering the outer circumferential surface of the tube 20, and the restraint member 50 woven into the sleeve 30 are crimped onto the sealing member main body 41 by the crimp member 43.

In addition, the restraint member 50 is provided only at a part of the circumference of the tube 20 (see Fig. 1, for example).

The restraint member 50 is provided to extend from the one end to the other end in the axial direction XA of the tube 20 and the sleeve 30. Specifically, as shown in Fig. 3(a), the restraint member 50 may be provided to extend from the sealing member 40 at the one end of the tube 20 to the sealing member 40 at the other end thereof in the axial direction XA.

However, the restraint member 50 does not necessarily have to completely extend from the sealing member 40 on the one end to the sealing member 40 on the other end. The restraint member 50 may not have to extend to any one of the sealing members 40 (in particular, not to the sealing member 40 that is most likely to be the free end when curl). In such a case, for example, the end of the restraint member 50 that does not extend to the sealing member 40 may be fixed to a portion of the tube 20 or the sleeve 30 on the other end, for example.

The crimp member 43 is larger than the outer diameter of the stem of the sealing member main body 41, and then crimped by a jig after the stem is inserted into it. The crimp member 43 crimps the tube 20 and the sleeve 30 together with the sealing member main body 41.

### (4) Curvature Behavior of Hydraulic Actuator 10

Figs. 3(a) and 3(b) are explanatory diagrams of behavior of the hydraulic actuator 10. In the hydraulic actuator 10 shown in Figs. 3(a) and 3(b), the sealing member 40 at its one end, which is located on the left side in the figures, is a fixed end. And, in the hydraulic actuator 10, the sealing member 40 on the other end, which is located on the right side, is a free end that is in a state of being able to move freely.

As described above, when the fluid pressure inside the tube 20 is increased by flowing the fluid into the hydraulic actuator 10, the sleeve 30 restrains (regulates) the expansion in the direction perpendicular to the axial direction XA, and the hydraulic actuator 10 attempts to elongate in the axial direction XA.

At that moment, at the part (an upper part in Figs. 3(a) and 3(b)) of the circumference of the tube 20 whose outer circumferential surface is covered by the sleeve 30, where the restraint member 50 is located, the restraint member 50 doesn't elongate, and thus the elongation of the tube 20 is inhibited. In contrast, at a part (a lower part in Figs. 3(a) and 3(b)) of the tube 20 opposite to the above part of the circumference of the tube 20, the tube 20 elongates. This causes the length in the expandable and contractible tube 20 at the part (the upper part in Figs. 3(a) and 3(b)), where the restraint member 50 is located, to be relatively shorter than the length at the opposite part (the lower part in Figs. 3(a) and 3(b)). As a result, as shown in Fig. 3(b), the free end (on the right side in Fig. 3(b)) curls toward the part where the restraint member 50 is located (upward in Fig. 3(b)).

### (5) Functions and Advantages

The hydraulic actuator 10 has the following features.
· Large curling angle (capable of curling more than 180 degrees)
· Easy to control force (generated force is proportional to pressure)
· Simple structure
· Also capable of direct contacting with the manipulation target according to surface coating

In addition, when the hydraulic actuator 10 of the present embodiment is used for a robot hand or the like, the restraint member 50 for restraining the expansion and contraction of the tube 20 will be located on an inner side of the curled state of the hydraulic actuator 10. Therefore, the sleeve 30 and the tube 20 on the inner side of the curl do not expand or contract during the curling process. Therefore, the contact point between the manipulation target and the hydraulic actuator 10 does not slip due to the expansion and contraction of the tube 20 during the curling process in the robot hand or the like using the hydraulic actuator 10. And, it can gently grip a soft or light and easily-deformable manipulation target without breaking or deforming it.

Furthermore, in a case where the restraint member 50 is configured of the restraint fiber cord 51 as in the hydraulic actuator 10 of the present embodiment, the deformable portions of the hydraulic actuator 10 such as the tube 20, the sleeve 30 and the restraint member 50 are made of materials that hardly deform plastically. Therefore, the hydraulic actuator 10 has flexibility that does not deform plastically even when it contacts another rigid body during operation or the like. Furthermore, since rigid members are not used in the parts where the hydraulic actuator 10 is deformed, such as the tube 20, sleeve 30, and restraint member 50, the ability to gently grip a soft or light, easily deformable operation target without causing it to break or deform is further improved.

Furthermore, when the axially-directed restraint member 50 is woven into the sleeve 30 to be integrated with it as in the hydraulic actuator 10 according to the present embodiment, the sleeve 30 and the restraint member 50 will exhibit integrated behavior. This configuration in which the restraint member 50 is integrated into the sleeve 30 facilitates control of the curled state of the hydraulic actuator 10.

### (6) Other Examples

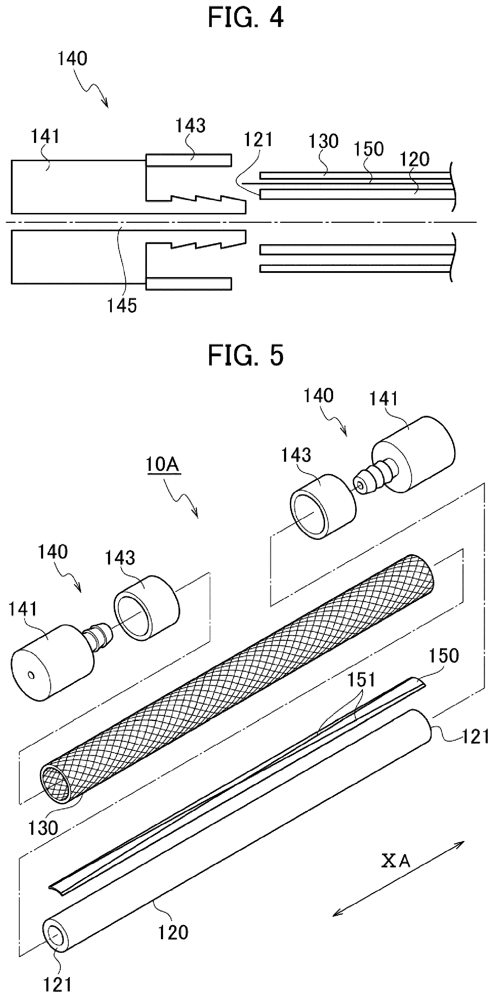

In the example of Fig. 4 which is not part of the invention, the restraint member and the sleeve may be provided independently from each other. However, when the restraint member 150 and the sleeve 130 are provided independently from each other as shown in Fig. 4, the restraint member 150 is disposed between the sleeve 130 and the tube 120.

Fig. 4 is a cross-sectional exploded view magnifying a state before crimping a vicinity of the sealing member 140 of the hydraulic actuator according to a modified example in which the restraint member 150 and the sleeve 130 are provided independently from each other. As shown in Fig. 4, in the modified example, the stem of the sealing member 140 provided with the sealing member main body 141 with a fluid passage 145 and the crimp member 143 is inserted into the tube 120. Then, in a state where the restraint member 150 is disposed between the sleeve 130 and the tube 120, the crimp member 143 is crimped to hold the tube 120, the sleeve 130, and the restraint member 150 together with the sealing member main body 141.

As a configuration in which the restraint member and the sleeve are provided independently from each other, a composite tape material made by sticking restraint fiber cords 151 and a thermoplastic tape or the like together may be used as the restraint member 150, for example.

In this case, the restraint member 150, which is the composite tape material, is provided to extend from the one end to the other end of the tube 120 in the axial direction XA. Here, the restraint fiber cords 151 of the composite tape material are also provided to extend from the one end to the other end of the tube 120 in the axial direction XA. The restraint fiber cords 151 may be sandwiched between the thermoplastic tapes to be stuck together, or a portion of the restraint fiber cords 151 may be in contact with or embedded in the thermoplastic tapes.

Here, with respect to the restraint fiber cord 151, similarly to the restraint fiber cord 51, the material of the restraint fiber cord(s) 151 can be selected from among fiber cords that can be used for the fiber cords 31, taking into consideration the desired tensile strength or the like.

In addition, there are no particular limitations on the materials that configure thermoplastic tape, but polypropylene (PP), high-density polyethylene (HDPE), medium-density polyethylene (MDPE), low-density polyethylene (LDPE), polystyrene (PS), polyethylene terephthalate (PETP), polybutylene terephthalate (PBTP), polyvinylidene fluoride (PVDF), polyamide 6 (PA6), polyamide 66 (PA66) or the like are exemplified.

Furthermore, when the composite tape material made by sticking the restraint fiber cord(s) 151 and the thermoplastic tape or the like is used as the restraint member 150, the plural restraint fiber cords 151 may be provided to extend from the one end to the other end of the tube 120 in the axial direction XA and to cross each other as shown in Fig. 5.

Furthermore, the restraint member may be configured to include plural restraint fiber cords that cross with each other by weaving the plural restraint fiber cords 51 into the sleeve 30 so that they cross each other.

In a case where the plural restraint fiber cords 51, 151, which cross each other, are included in the restraint member 50, 150, the part of the circumference of the tube 20, 120 at which the restraint member 50, 150 is located may be in a range with less than 1/3 of the circumferential length of the circumference.

In a case where the restraint member includes plural restraint fiber cords 51 that cross each other, the deformation of the hydraulic actuator 10 that curls so that increasing of only the tension of some of the restraint fiber cords 51 is suppressed, and thus the hydraulic actuator 10 is curled along the predetermined direction in which the restraint member 50 extends.

In addition, in a case where the restraint member 150 is provided independently from the sleeve 130 as described above and the hydraulic actuator 10 is used in an application where higher rigidity is required, a leaf spring that is flat or curved to follow the cross-sectional shape of the tube 120 may be used as the restraint member 150 provided independently from the sleeve 130. Even when a leaf spring is used as the restraint member 150, the restraint member 150 is provided at a part of the circumference of the tube 120. In addition, when a leaf spring is used as the restraint member 150, the hydraulic actuator to be curled with increased rigidity can be brought by disposing the restraint member 150 between the sleeve 130 and the tube 120.

Dimensions of a leaf spring should be selected according to the size of the hydraulic actuator and the required generating force, and are not particularly limited. In addition, a material of a leaf spring is also not limited, but should be a material that is easy to bend and resistant to compression, typically a metal such as stainless steel. For example, the restraint member 150 may be formed by a thin plate of carbon fiber reinforced plastic (CFRP), etc.. CFRP is less susceptible to plastic deformation than metal, so even when used as the restraint member 150, the hydraulic actuator can easily return to its original straight state after curling.

A width of a leaf spring as the restraint member 150 is not particularly limited, but based on the outer diameter of the tube 120, it can be approximately half of said outer diameter. As an example, the outer diameter of the tube 120 may be 11 mm, the length of the tube 120 before elongation may be 185 mm, the width of the restraint member 150 (the leaf spring) may be 6 mm, and its thickness may be 0.5 mm.

In addition, the restraint member 50, 150 is provided at the part of the circumference of the tube 20, 120 (1/3 or less of the circumferential length) in the above-described modified example. However, the restraint member may be provided in an almost half range of the circumference of the tube 20, 120 (half of the circumference) as long as curling ability of the hydraulic actuator 10 can be ensured.

Furthermore, the restraint member 50, 150 is provided from the one end to the other end of the tube 20, 120 and the sleeve 30, 130 in the axial direction XA in the embodiment and the modified example described above. However, the restraint member 50, 150 needs not necessarily be provided from the one end to the other end in the axial direction XA, as long as it is provided over almost the entire area in the axial direction XA.

Although the embodiment of the present invention is described above, the descriptions and the drawings that form part of this disclosure should not be understood as limiting the invention. Various alternative embodiments will be apparent to those skilled in the art within the scope of the claim.

## Claims

1. A hydraulic actuator (10) comprising:
a tube (20) capable of being expanded and contracted by fluid pressure;
a sleeve (30) that is a structural member made of woven fiber cords (31) directed in predetermined directions (θ1) to exert stretchability and covers an outer circumferential surface of the tube (20); and
a sealing member (40) that seals each end (21) of the tube (20) in an axial direction (XA) thereof,
wherein the predetermined directions (θ1) in which the woven fiber cords (31) of the sleeve (30) are directed are oriented such that the tube (20) elongates when expanded,
wherein the hydraulic actuator (10) further comprises a restraint member (50) that is provided at a part of a circumference of the tube (20) to extend from one end (21) to another end (21) of the tube (20) in the axial direction (XA) and restraints an elongation of the part of the circumference of the tube (20) in the axial direction (XA), to allow the hydraulic actuator to curl so as to deviate from the axial direction,
**characterised in that** the restraint member (50) is configured of a restraint fiber cord (51) that is woven into the sleeve (30) to be integrated therewith, and
the restraint fiber cord (51) is woven into the sleeve (30) so as to cross the fiber cords (31) at positions where the fiber cords (31) of the sleeve cross each other.

## Patentansprüche

1. Hydraulische Betätigungsvorrichtung (10), umfassend:
ein Rohr (20), das fähig ist, durch Fluiddruck ausgedehnt und zusammengezogen zu werden;
eine Hülle (30), die ein Strukturelement ist, das aus gewebten Faserstränge (31) hergestellt ist, die in vorbestimmten Richtungen (θ1) geleitet sind, um Dehnbarkeit auszuüben, und die eine äußere Umfangsfläche des Rohrs (20) bedeckt; und
ein Dichtungselement (40), das jedes Ende (21) des Rohrs (20) in einer Axialrichtung (XA) davon abdichtet,
wobei die vorbestimmten Richtungen (θ1), in denen die gewebten Faserstränge (31) der Hülle (30) geleitet werden, so ausgerichtet sind, dass sich das Rohr (20) verlängert, wenn es ausgedehnt wird,
wobei die hydraulische Betätigungsvorrichtung (10) weiter ein Einschränkungselement (50) umfasst, das an einem Teil eines Umfangs des Rohrs (20) bereitgestellt ist, um sich von einem Ende (21) zum anderen Ende (21) des Rohrs (20) in der Axialrichtung (XA) zu erstrecken, und das eine Verlängerung des Teils des Umfangs des Rohrs (20) in der Axialrichtung (XA) einschränkt, um der hydraulischen Betätigungsvorrichtung Einrollen zu ermöglichen, sodass es von der Axialrichtung abweicht,
**dadurch gekennzeichnet, dass** das Einschränkungselement (50) aus einem Einschränkungsfaserstrang (51) konfiguriert ist, der in die Hülse (30) eingewebt ist, um damit integriert zu werden, und
der Einschränkungsfaserstrang (51) in die Hülle (30) eingewebt ist, um die Faserstränge (31) an Positionen zu kreuzen, an denen sich die Faserstränge (31) der Hülle einander kreuzen.

## Revendications

1. Actionneur hydraulique (10) comprenant :
un tube (20) capable d'être dilaté et contracté par une pression de fluide ;
un manchon (30) qui est un élément structurel constitué de cordons de fibres tissées (31) orientés dans des directions prédéterminées (θ1) pour exercer une extensibilité et recouvre une surface circonférentielle extérieure du tube (20) ; et
un élément d'étanchéité (40) qui scelle chaque extrémité (21) du tube (20) dans une direction axiale (XA) de celui-ci,
dans lequel les directions prédéterminées (θ1) dans lesquelles les cordons de fibres tissées (31) du manchon (30) sont orientés de telle sorte que le tube (20) s'allonge lorsqu'il est dilaté,
dans lequel l'actionneur hydraulique (10) comprend en outre un élément de retenue (50) qui est prévu au niveau d'une partie d'une circonférence du tube (20) pour s'étendre d'une extrémité (21) à une autre extrémité (21) du tube (20) dans la direction axiale (XA) et empêche un allongement de la partie de la circonférence du tube (20) dans la direction axiale (XA), pour permettre à l'actionneur hydraulique de se courber de manière à dévier de la direction axiale,
**caractérisé en ce que** l'élément de retenue (50) est constitué d'un cordon de fibres de retenue (51) qui est tissé dans le manchon (30) pour être intégré à celui-ci, et
le cordon de fibres de retenue (51) est tissé dans le manchon (30) de manière à croiser les cordons de fibres (31) au niveau de positions où les cordons de fibre (31) du manchon se croisent.
